# EUROPEAN PATENT APPLICATION

(11) **EP 0 957 299 A1**
(43) Date of publication of application: **17.11.1999**
(21) Application number: 99107764.5
(22) Date of filing: 19.04.1999
(51) Int. Cl.: F16K 17/38

(54) **Safety valve assembly for a vehicle gaseous fuel tank**

(30) Priority: 29.04.1998 IT TO980081 U
(71) Applicant: MTM - Meccanica Tecnica Moderna S.r.l., 12062 Cherasco (IT)
(72) Inventor: Asteggiano, Matteo, 12060 Pollenzo (IT)
(74) Representative: Eccetto, Mauro

(57) **Abstract**

A safety valve assembly (15) for a vehicle gaseous fuel tank has a pressure-limiting valve (35) in turn having a preloaded forcing spring (37); and a member (29) made of low-melt material, located in series with the forcing spring (37), and which melts to vary the preload of the spring (37) when the operating temperature exceeds a predetermined threshold value lower than the minimum initial-failure temperature of the tank (1).

## Description

The present invention relates to a safety valve assembly for a vehicle fuel tank.

In particular, the present invention relates to a safety valve assembly for the fuel tank of a methane-fuelled vehicle.

As is known, to increase the fuel range of methane-fuelled vehicles, the methane is fed into the tank at relatively high pressure - normally about two hundred bars - and a pressure-limiting or safety valve is provided to prevent the pressure inside the tank from exceeding, for various reasons, a predetermined threshold value.

Like all tanks, though made of metal and sized and tested to withstand pressures far higher than the threshold value, the resistance of the tank decreases considerably alongside an increase in temperature, and falls sharply when the temperature reaches a critical value. In the event of the vehicle catching fire, therefore, even a low pressure (10-20 bar) of the gas inside the tank is sufficient for the tank to explode violently, thus endangering anyone and/or anything in the immediate vicinity. By way of a solution to the problem, a through opening is formed in the lateral wall of the tank and closed with a cap or diaphragm made of low-melt material. When subjected to high temperature, the cap melts to allow the gas inside the tank to flow freely out through the opening, thus gradually reducing the pressure inside the tank to practically zero, and so preventing the tank from exploding, regardless of the operating temperature of the tank and valve assembly.

While indeed preventing the tank from exploding alongside an increase in operating temperature, low-melt caps pose several problems on account of the difficulty encountered in ensuring stable sealing between the two completely different materials from which the cap and tank are made. That is, even only a slight variation in temperature is sufficient to at least partly detach the two materials, thus resulting in uncontrollable fuel leakage to the outside.

It is an object of the present invention to provide a straightforward, low-cost safety valve assembly designed to eliminate the aforementioned drawback, and which, at the same time, is extremely reliable, efficient and compact.

According to the present invention, there is provided a safety valve assembly for a vehicle gaseous fuel tank; the safety valve assembly comprising a pressure-limiting valve in turn comprising elastic forcing means, and being characterized by also comprising a safety member made of thermally deformable material, located in series with said elastic forcing means, and which is deformed to vary the preload of the elastic forcing means when the operating temperature exceeds a predetermined threshold value lower than the minimum initial-failure temperature of said tank.

A non-limiting embodiment of the invention will be described by way of example with reference to the accompanying drawings, in which:
Figure 1 shows a section of a preferred embodiment of the safety valve assembly according to the present invention and fitted to a fuel tank shown only partly;
Figure 2 shows a larger-scale section of a detail of the Figure 1 valve assembly;
Figure 3 shows a larger-scale section of a detail of the Figure 1 and 2 valve assembly in a different operating condition.

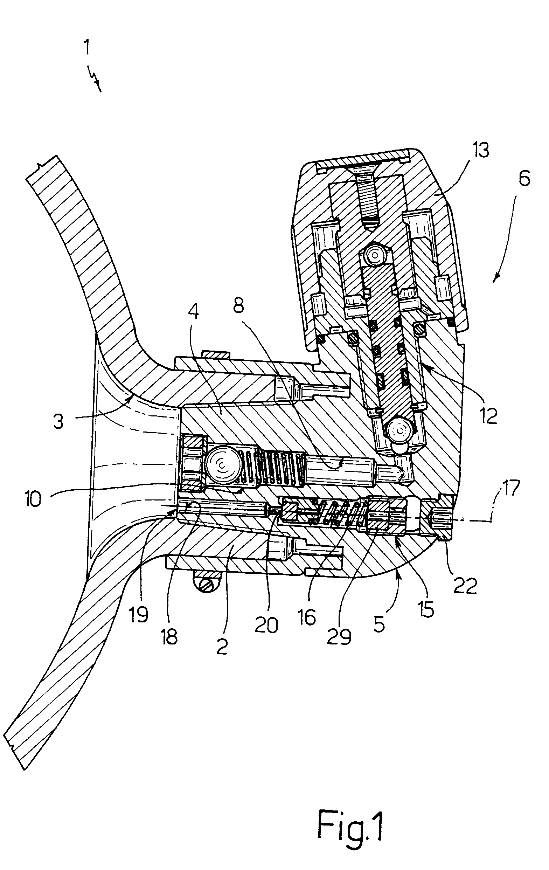

Number 1 in Figure 1 indicates a vehicle tank for gaseous fuel, preferably methane. Tank 1 comprises an internally-threaded collar 2, which defines an inlet/outlet opening 3 of tank 1, and houses a connecting portion 4 of a body 5 of a valve assembly 6.

A conduit 8 is formed inside body 5, communicates at one end with the inside of tank 1 through opening 3, communicates with the outside at the other end, and is fitted with a nonreturn valve 10 (Figure 1); and a known on-off valve 12, forming part of assembly 6, comprises a knob 13 and provides, in use, for preventing gas flow along conduit 8.

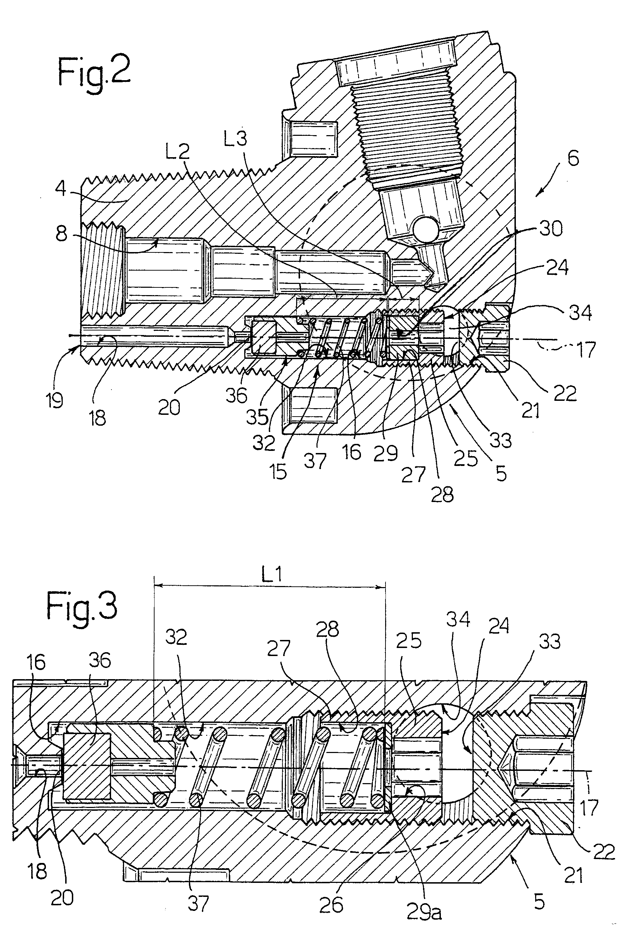

As shown in Figure 1, and particularly in Figures 2 and 3, valve assembly 6 also comprises a safety valve device 15 for preventing tank 1 from exploding in the event of both an accidental increase in pressure inside tank 1, and overheating of tank 1 and valve assembly 6.

In the example shown, body 5 comprises a cavity 16 having a respective axis 17, and which communicates with the inside of tank 1 along a conduit 18 having an inlet 19, which comes out inside opening 3, and an outlet 20, which comes out inside cavity 16. Cavity 16 has an opening 21 communicating with the outside and closed by a threaded pin 22, and comprises a threaded intermediate portion to which is screwed a cup-shaped body 24 having a lateral wall 27, and an end wall 25 facing pin 22 and in turn having a through hole 26 (Figure 3) coaxial with axis 17. Together with wall 25, lateral wall 27 defines a seat 28 extending coaxially with axis 17, and which has an inlet facing outlet 20 of conduit 18, and houses a body 29. Body 29 comprises a through hole 30 coaxial with axis 17, rests against wall 25, and is made of thermally deformable material which deforms when the operating temperature exceeds a predetermined threshold value lower than the minimum initial-failure temperature of tank 1. Body 29 is preferably made of a low-melt alloy containing, for example, tin and/or lead and/or bismuth, and having a melting temperature of 80 to 160°. Conveniently, but not necessarily, said low-melt alloy has a melting temperature of about 140°.

As shown in Figure 1, and particularly in Figures 2 and 3, cup-shaped body 24 divides cavity 16 into two chambers 32 and 33; chamber 32 communicates with conduit 18; and chamber 33 communicates externally along an exhaust conduit 34, and with chamber 32 through holes 26 and 30. Chamber 32 and body 24 form part of a pressure-limiting valve 35 (Figure 2) comprising a plug body 36 housed in axially-sliding manner inside chamber 32 and forced against outlet 20 of conduit 18 by a spring 37, which is also housed inside chamber 32, coaxially with axis 17, is compressed between bodies 36 and 29, and is separated from body 29 by an annular plate 29a. Spring 37 is so sized as to prevent the pressure inside tank 1 from exceeding a predetermined threshold value, and to be of minimum, substantially no, effect in the absence of low-melt body 29. In other words, spring 37 and body 29 are so sized that the free length L1 of spring 37 is less than or at most equal to the length L2 of spring 37 when loaded (Figure 2) plus the length L3 of body 29 measured along axis 17.

In actual use, the pressure of the gas in tank 1 is maintained below said threshold value by pressure-limiting valve 35, which, as the pressure inside tank 1 exceeds the threshold value, opens to expel gas to the outside via chamber 16, holes 26 and 30, and conduit 34.

In the event the operating temperature exceeds the threshold value, e.g. as a result of the vehicle catching fire, body 29 first deforms, and then melts to gradually reduce the preload of spring 37, which, once melting is complete, is practically zero. As body 29 deforms/melts, thus reducing the preload of spring 37, the threshold pressure value inside tank 1 is reduced accordingly, so that the pressure inside tank 1 gradually falls to almost zero by the time spring 37 is practically discharged.

Even in the event of a sharp rise in temperature and, hence, conditions possibly resulting in structural failure of tank 1, the particular location of the low-melt material therefore prevents tank 1 from exploding, thus eliminating any danger to anyone and/or anything in the immediate vicinity of the vehicle.

Unlike known solutions, the particular location of the low-melt material obviously also enables the production of homogeneous tanks of uniform resistance, by virtue of the tanks having no high-stress or critical sealing portions. At the same time, the low-melt material of valve assembly 6 in no way impairs the efficiency or sealing of valve assembly 6, by the low-melt material having no sealing function and simply providing for supporting and/or preloading spring 37 of pressure-limiting valve 35.

The construction characteristics of valve assembly 6 as described therefore provide for obtaining vehicle fuel supply systems which are efficient, reliable, compact and, above all, extremely safe regardless of the operating conditions of the tank and valve assembly.

Clearly, changes may be made to valve assembly 6 as described herein without, however, departing from the scope of the present invention. In particular body 29 of low-melt material may be of a different form and/or geometry from those described, and may be located in a different position with respect to spring 37 from that indicated by way of example; and spring 37 itself may cooperate directly with body 29 or via separating means other than that described.

Moreover, safety valve device 15, as opposed to forming part of valve assembly 6, may be housed in a respective supporting case connected to any portion of tank 1. In which case, in the event of a rise in temperature and consequent deformation of the low-melt material, the gas would flow directly outside through the hole formed in cup-shaped body 24, and any gas issuing solely as a result of an increase in pressure could be expelled through openings formed directly in said supporting casing and so located as to connect the chamber housing Spring 37 to the outside.

## Claims

1. A safety valve assembly (15) for a vehicle gaseous fuel tank; the safety valve assembly (15) comprising a pressure-limiting valve (35) in turn comprising elastic forcing means (37), and being characterized by also comprising a safety member (29) made of thermally deformable material, located in series with said elastic forcing means (37), and which is deformed to vary the preload of the elastic forcing means (37) when the operating temperature exceeds a predetermined threshold value lower than the minimum initial-failure temperature of said tank (1).

2. An assembly as claimed in Claim 1, characterized in that said safety member (29) is made of low-melt material having a melting temperature ranging between 80 and 160 degrees centigrade.

3. An assembly as claimed in Claim 1 or 2, characterized in that said pressure-limiting valve (35) also comprises movable plug means (36) for closing in fluidtight manner an outlet (20) of a first conduit (18) communicating, in use, with the inside of said tank (1); and in that said safety member (29) and said plug means (36) are located on opposite sides of said elastic forming means (37).

4. An assembly as claimed in Claim 3, characterized in that said elastic forcing means comprise at least one compression spring (37) extending coaxially with an axis (17); and in that said safety member (29) extends substantially along said axis (17).

5. An assembly as claimed in Claim 4, characterized in that said spring (37) is compressed between said plug means (36) and said safety member (29).

6. An assembly as claimed in Claim 4 or 5, characterized in that said spring (37) cooperates directly in contact with said safety member (29).

7. An assembly as claimed in one of Claims 4 to 6, characterized in that said safety member (29) is of a length (L3), measured along said axis (17), substantially equal to the difference between the free length (L1) and the loaded length (L2) of said spring (37).

8. An assembly as claimed in any one of Claims 3 to 7, characterized in that said safety member (29) comprises a second conduit (30) along which flows, in use, the gas issuing from said tank (1) along said first conduit (18).

9. An assembly as claimed in Claim 8, characterized in that said pressure-limiting valve (35) comprises an adjustable supporting body (24); the supporting body (24) comprising a seat (28) for at least partly housing said safety member (29), and having a third conduit (26) communicating with said second conduit (30) and with the outside.
